Europäisches Patentamt

European Patent Office

Office européen des brevets

(11) Veröffentlichungsnummer: **0 222 235**
**A2**

(12) # EUROPÄISCHE PATENTANMELDUNG

(21) Anmeldenummer: 86114838.5

(22) Anmeldetag: 25.10.86

(51) Int. Cl.⁴: **G 11 B 15/473**

(30) Priorität: 02.11.85 DE 3538985

(43) Veröffentlichungstag der Anmeldung:
20.05.87 Patentblatt 87/21

(84) Benannte Vertragsstaaten:
AT BE CH DE ES FR GB GR IT LI LU NL SE

(71) Anmelder: Deutsche Thomson-Brandt GmbH
Postfach 2060
D-7730 Villingen-Schwenningen(DE)

(72) Erfinder: Link, Herrmann, Dipl.-Ing.
Augenmoosstrasse 10
D-7730 VS-Obereschach(DE)

(72) Erfinder: Kaaden, Jürgen, Dipl.-Ing.
Im Tannhörnle 10
D-7730 Villingen(DE)

(74) Vertreter: Einsel, Robert, Dipl.-Ing.
Deutsche Thomson-Brandt GmbH Patent- und
Lizenzabteilung Göttinger Chaussee 76
D-3000 Hannover 91(DE)

(54) Geschwindigkeitsregelung.

(57) Die Erfindung betrifft eine Geschwindigkeitsregelung für die Kopftrommel in einem Magnetbandgerät. Im Wiedergabebetrieb wird aus der jeweiligen Absolutgeschwindigkeit des Magnetbandes ein Signal (8) abgeleitet, mit dem die Relativgeschwindigkeit der Spurabtastung konstant gesteuert wird, indem die Kopftrommelgeschwindigkeit an die jeweilige Bandgeschwindigkeit angepaßt wird.

EP 0 222 235 A2

## Geschwindigkeitsregelung

Handelsübliche Videorecorder arbeiten nach dem Schrägspurverfahren, um die erforderliche Aufzeichnungsgeschwindigkeit, die
sich aus der höchsten aufzuzeichnenden Frequenz sowie aus den
Spaltabmessungen eines Videokopfes ergibt, mit möglichst geringem Magnetbandverbrauch zu realisieren.

Das Magnetband wird schraubenlinienförmig um eine Kopftrommel
geführt, wobei entweder die ganze Kopftrommel oder auch Teile
der Kopftrommel mit den Magnetköpfen rotieren. Bei Vorschub des
Bandes werden nebeneinanderliegende Magnetspuren auf das Band
aufgezeichnet, die schräg zur Bandlaufrichtung verlaufen. Der
Inhalt einer Magnetspur entspricht bei den handelsüblichen
Systemen dem Inhalt eines Fernsehhalbbildes. Für einen bekannten
Recorder nach dem VHS-System mit zwei Videoköpfen, die zwei
Magnetspuren pro Kopftrommelumdrehung aufzeichnen, ergibt sich
eine theoretische relative Aufzeichnungsgeschwindigkeit Vrel,
die aus folgenden Daten errechnet werden kann:

$$Vrel = U * R - VB = 4,8460786 \text{ m/s}$$

In der Formel bedeuten:

U = Umfang der Kopftrommel mit D = 62 mm ∅
R = Umdrehung der Kopftrommel pro Sekunde (25/s)
VB = Bandgeschwindigkeit bei Aufnahme (23,39 mm/s)

Das Minuszeichen für VB ergibt sich aus der Bandlaufrichtung,
die bei Aufnahme nach der Systemnorm in Drehrichtung der Kopftrommel ist.

Um die Geschwindigkeit mit möglichst hoher Genauigkeit zu erreichen, sind Servosysteme für die Regelung sowohl der Kopftrommeldrehzahl als auch für den Bandvorschub durch den Capstan-
Motor vorgesehen. Bei der Aufnahme dienen die vom Fernsehsignal gelieferten Vertikalsynchronimpulse als Referenz für die Kopftrommelgeschwindigkeitsregelung, während der Magnetbandantrieb
von einem Quarzoszillator als Referenz für dessen Geschwindigkeitsregelung gesteuert wird. Die Vertikalsynchronimpulse werden
bei Aufnahme nach Umformung auf einer besonderen Steuerspur aufgezeichnet und dienen bei Wiedergabe im Vergleich mit Impulsen,
die von einem mit der Kopftrommelumdrehung starr verbundenen
pickup-Pulsgenerator erzeugt werden, als Steuersignal für die
Phasensteuerung des Magnetbandantriebes. Die Geschwindigkeitsregelung der Kopftrommel im Wiedergabebetrieb wird von dem
Quarzoszillator gesteuert, der bei Aufnahme auch als Referenz
für den Magnetbandantrieb dient.

Diese Regelungen haben sich bei Aufzeichnung und Wiederbabe mit
den vom System vorgegebenen Soll-Geschwindigkeiten bewährt.

Bei unterschiedlichen Wiedergabegeschwindigkeiten allerdings,
wie z.B. schneller Bildsuchlauf vorwärts und rückwärts, Zeitlupe
oder Standbild, ergibt sich durch die Geschwindigkeitsabweichung
des Magnetbandes von der Aufnahmegeschwindigkeit eine veründete
Relativgeschwindigkeit für die Spurabtastung. Läuft das Magnetband im Vorlauf schneller, muß auch die Drehzahl der Kopftrommel
erhöht werden, oder bei Standbild und Rückwärtslauf verringert
werden, um gleiche Relativgeschwindigkeit zwischen Magnetbandvorschub und Kopftrommelgeschwindigkeit wieder herzustellen. Bei
Abweichungen hiervon ergeben sich Mängel in der Bildwiedergabe,
die sich als Synchronisationsstörungen oder auch als Fehler in
der Farbdeckung durch zeitliches Verschieben zwischen Chrominanz- und Luminanzsignal bemerkbar machen.

Um solche Mängel zu beseitigen, ist es bekannt, für die verschiedenen im allgemeinen fest vorgegebenen Wiedergabegeschwindigkeiten, die Kopftrommeldrehzahl nachzuregeln. So werden z.B.
Potentiometer mit einer entsprechenden Schaltung jeder Geschwindigkeitsstufe zugeordnet, mit denen jeweils die entsprechende
Kopftrommeldrehzahl angepaßt wird. Allerdings hat diese Lösung
den Nachteil, daß bei Übergängen von einer Geschwindigkeit auf eine andere keine Anpassung der Relativgeschwindigkeit möglich
ist.

Auch ist es bekannt, die abgetastete Horizontalfrequenz in einer
PLL-Schaltung mit der Soll-Frequenz zu vergleichen, und bei Abweichungen die Kopftrommeldrehzahl nachzuregeln. Die PLL muß
aber bei Wiedergabe mit Normgeschwindigkeit ausgeschaltet
werden, damit bei Dropouts oder Aufnahme mit fehlerhaften
Synchronsignalen keine unbeabsichtigte Veränderung der Kopftrommeldrehzahl erfolgt.

Es ist Aufgabe der Erfindung, für jede beliebige oder alle
vorkommenden Magnetbandgeschwindigkeiten im Wiedergabebetrieb
eine Schaltung für die konstante Steuerung einer vorgegebenen
Relativgeschwindigkeit für die Spurabtastung aufzuzeichnen.
Diese Aufgabe wird durch eine Geschwindigkeitsregelung nach dem
Oberbegriff des Patentanspruchs 1, durch die im Kennzeichen des
Anspruchs 1 beschriebenen Merkmale gelöst. Weiterbildungen der
Erfindung sind in den Unteransprüchen beschrieben.

Im Prinzip wird bei der jeweiligen Geschwindigkeit des Magnetbandes ein dieser Geschwindigkeit proportionales Signal für die
Steuerung der konstanten Relativgeschwindigkeit der Abtastung
ausgenutzt. Dieses Signal kann z.B. von einem Frequenzgenerator
geliefert werden, der mit der Welle des das Magnetband direkt
antreibenden Capstan-Motors mechanisch gekoppelt ist. Das Signal
wird in einer Auswerteschaltung unter Berücksichtigung einer
Konstanten, die sich aus der Systemnorm bei Standbild (Zeit
einer Spuraufzeichnung = 20 ms) ergibt, geformt. Außerdem muß
der Auswerteschaltung die jeweils gewählte Bandlaufrichtung
vorgegeben werden. Für die Auswertung kann folgende Beziehung
aufgestellt werden:

$$TD1 \pm K * \frac{VB1}{VB2} = TD3$$

es bedeuten:

TD1 = Umdrehungszeit für eine Kopftrommelumdrehung bei stehendem Band
VB1 = Ist-Bandgeschwindigkeit
VB2 = Bandgeschwindigkeit bei Aufnahme
TD3 = Soll-Umdrehungszeit für eine Kopftrommelumdrehung

Der Wert der Konstanten K ergibt sich aus dem Verhältnis der Umdrehungsgeschwindigkeiten der Kopftrommel bei Standbild zu der bei Aufnahme.

$$K = \frac{VD2}{VD1} * TD2 - TD2$$

Es bedeuten:

VD2 = Umdrehungsgeschwindigkeit der Kopftrommel bei Aufnahme
VD1 = Umdrehungsgeschwindigkeit der Kopftrommel bei stehendem Band
TD2 = Umdrehungszeit der Kopftrommel für eine Vollumdrehung bei Aufnahme

Da sich im Magnetbandvorlauf die Kopftrommel gegenüber der Standbildwiedergabe für konstante Relativgeschwindigkeit der Spurabtastung schneller drehen muß, ist in der Formel das negative Vorzeichen gültig, während bei Rücklauf das positive Vorzeichen gewählt werden muß. Die Auswerteschaltung kann als analoge Schaltung, aber auch für höhere Genauigkeit als digitale Schaltung z.B. in Form eines Mikroprozessors ausgeführt sein.

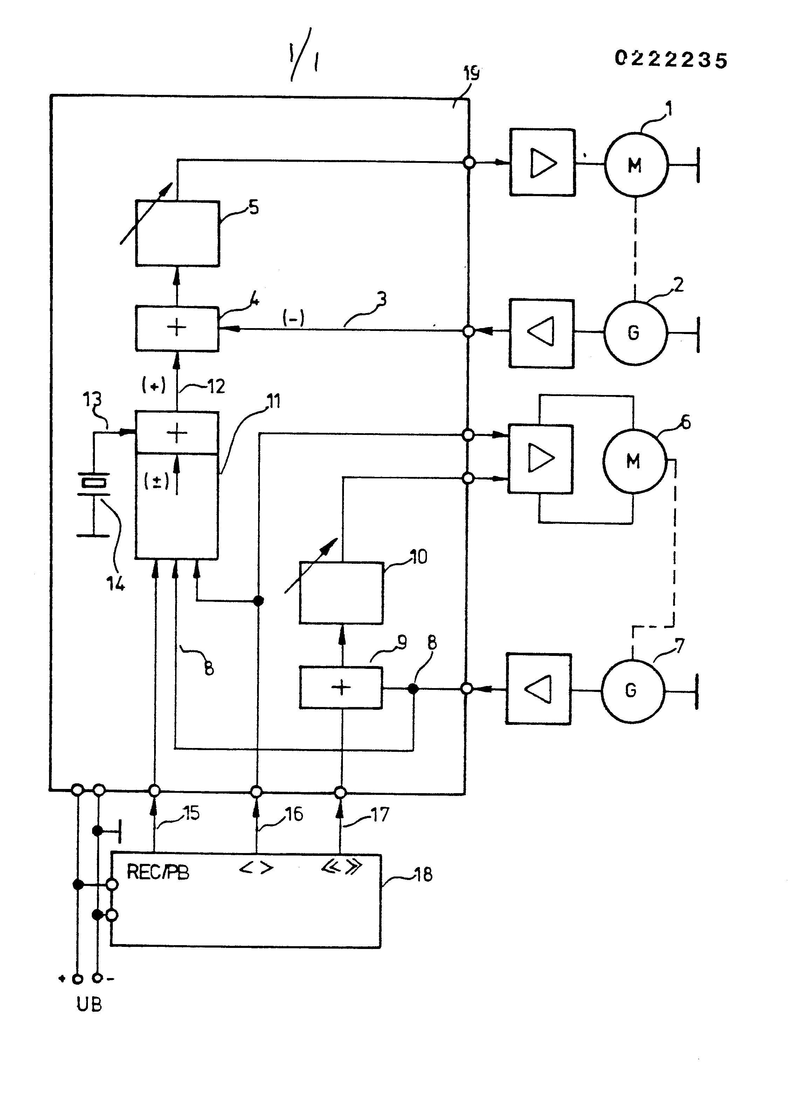

Anhand der Figur soll die Erfindung näher erläutert werden. Sie zeigt in einem beispielhaften Blockschaltbild die Nachsteuerung der Regelschaltung für den Kopftrommelmotor 1 durch ein Signal 8, welches einem Generator 7 des Capstan-Motors 6 entnommen wird. Das Signal 8 ist proportional zur momentanen Geschwindigkeit des Magnetbandes. Der Regelschaltung 5 für den Kopftrommelmotor 1 ist eine Additionsstufe 4 vorgeschaltet, in der das kopftrommeldrehzahlproportionale Signal 3 aus Generator 2 mit einem Sollwert 12 aus einer Auswerteschaltung 11 addiert wird.
Sind beide Werte gleich groß, wird die Regelschaltung 5 nicht
angesteuert, da das Signal 3 negatives Vorzeichen gegenüber dem
Sollwert 12 hat.

Der Sollwert 12 wird in der Auswerteschaltung 11 erzeugt. Er ist
einerseits abhängig von dem Signal 8, welches der momentanen
absoluten Geschwindigkeit des Magnetbandvorschubes proportional
ist und andererseits von der Richtung des Bandvorschubes, die
über die mit dem Bedienteil 18 verbundene Befehlsleitung 16
vorgegeben wird. Außerdem ist der Sollwert 12 abhängig von einer
Systemkonstanten 13, die sich durch die Änderung der relativen
Abtastgeschwindigkeit zwischen Standbild und Aufzeichnung
ergibt. Diese Konstante 13 wird durch einen Quarzoszillator 14
dargestellt, dessen konstantes Signal in der Auswerteschaltung
11 mit den übrigen Signalen addiert wird. Die Systemkonstante 13
gibt den Sollwert 12 vor, wenn das Band steht, d.h. Signal 8
gleich Null ist. Bei Aufnahme, welche über die Befehlsleitung 15
vom Bedienteil 18 steuerbar ist, wird der Konstante 13 eine
weitere Konstante zugeordnet, durch die das Signal 12 auf den
Sollwert für Aufnahme, nämlich 40 ms für eine Zweikopf-Kopftrommel festgehalten wird.

Die Vorgabe der Wiedergabegeschwindigkeit geschieht über die
Befehlsleitung 17, die das Bedienteil 18 mit einer Additionsstufe 9 verbindet. Von dieser Additionsstufe 9 wird die Magnetbandgeschwindigkeit mit Hilfe der Regelschaltung 10 in Vor- und
Rückwärtsrichtung gesteuert.

Die komplette Regelung für Capstan-Motor und Kopftrommelmotor
kann in einer integrierten Schaltung 19 zusammengefaßt werden.
Diese integrierte Schaltung 19 kann als Teil eines Mikroprozessors ausgeführt sein.

Deutsche Thomson-Brandt GmbH
Postfach 20 60

7730 Villingen-Schwenningen

— \ ⌒

Hannover, den 30.10.1985
PTL-Sn/ds        H 85/064
                 T-PA 595

Patentansprüche

1.   Geschwindigkeitsregelung für die Kopftrommel in einem Magnetbandgerät, insbesondere für Videorecorder mit Schrägspuraufzeichnung, mit einem Motor für den Kopftrommel-und
     einem Motor für den Magnetbandantrieb, mit elektronischen
     Einrichtungen für die Regelung beider Motore und mit
     einstellbaren, von der Aufnahmegeschwindigkeit abweichenden
     Wiedergabegeschwindigkeiten, dadurch gekennzeichnet, daß im
     Wiedergabebetrieb aus der jeweiligen Absolutgeschwindigkeit
     des Magnetbandes ein Signal (8) abgeleitet wird, welches
     über eine Auswerteschaltung (11) der Regelschaltung (5) für
     den Kopftrommelmotor (1) zugeführt wird und durch Steuerung
     der Kopftrommeldrehzahl die Relativgeschwindigkeit der
     Spurabtastung konstant steuert.

2.   Geschwindigkeitsregelung nach Anspruch 1, dadurch gekennzeichnet, daß der Auswerteschaltung (11) zusätzlich zu dem
     aus der Absolutgeschwindigkeit des Magnetbandes ermittelten
     Signal (8) ein zweites konstantes Signal (13) zugeführt
     wird, welches bei stehendem Magnetband (Standbild) die
     Kopftrommeldrehzahl steuert.

3.  Geschwindigkeitsregelung nach Anspruch 1 und Anspruch 2,
    dadurch gekennzeichnet, daß die Steuerung der Relativgeschwindigkeit der Spurabtastung bei stehendem und auch
    bei vor- und rückwärts angetriebenem Magnetband erfolgt.

4.  Geschwindigkeitsregelung nach Anspruch 1, dadurch gekennzeichnet, daß die Steuerung der Relativgeschwindigkeit der
    Spurabtastung abschaltbar ist, wenn eine Phasenregelung für
    die Kopftrommelnachsteuerung erfolgt.

5.  Geschwindigkeitsregelung nach einem der Ansprüche 1 - 4,
    dadurch gekennzeichnet, daß die elektronischen Einrichtun-
    gen für die Regelung der Motore (4,5,9,10) und die Auswerteschaltung (11) in einer integrierten Schaltung (19)
    zusammengefaßt sind.

6.  Geschwindigkeitsregelung nach Anspruch 5, dadurch gekennzeichnet, daß die integrierte Schaltung (19) ein Mikro-
    prozessor ist.

0222235

H85/64